Europäisches Patentamt

European Patent Office

Office européen des brevets

(19)

(11) Veröffentlichungsnummer: **0 667 723 A2**

## (12) EUROPÄISCHE PATENTANMELDUNG

(21) Anmeldenummer: **95102538.6**

(22) Anmeldetag: **13.02.95**

(51) Int. Cl.6: **H04Q 3/62**, H04M 7/00

(30) Priorität: **15.02.94 CH 446/94**

(43) Veröffentlichungstag der Anmeldung:
**16.08.95 Patentblatt 95/33**

(84) Benannte Vertragsstaaten:
**CH DE FR LI**

(71) Anmelder: **SIEMENS-ALBIS AKTIENGESELLSCHAFT PV/Patente und Verträge**

Postfach,
**Albisriederstrasse 245
CH-8047 Zürich (CH)**

(72) Erfinder: **Bisig, Bruno
Neudorfstrasse 39
CH-8820 Wädenswil (CH)**
Erfinder: **Rippstein, Eugen
Brunnenzelgstrasse 9
CH-8904 Aesch (CH)**

(54) **Verfahren zum Übermitteln von Daten zwischen Fernmeldenebenstellenanlagen.**

(57) Die Erfindung bezieht sich auf ein Verfahren zur Übermittlung von Daten - wie beispielsweise Sprache, Text oder sonstige Informationen - zwischen zwei miteinander über ein Netzwerk (NW) verbundene Vermittlungseinheiten (R1), indem mindestens ein Übertragungskanal zwischen den Vermittlungseinheiten aufgebaut wird. Dabei wird neben den für das Netzwerk (NW) benötigten Signalisierungsinformationen auch sogenannte "in-Band"-Signalisierungsinformationen, die für die miteinander verbundenen Vermittlungseinheiten bestimmt und für das Netzwerk (NW) transparent sind, benötigt und in Nutzkanälen übertragen. Da die für die Vermittlungseinheiten bestimmten Signalisierungsinformationen getrennt von den Nutzinformationen vorzugsweise in verschiedenen Übertragungskanälen übermittelt werden, müssen lediglich so viele Nutzkanäle aufgebaut werden, wie dies vom momentanen Verkehrsaufkommen verlangt wird. Zur Durchführung dieses Verfahrens ist in einer Vermittlungseinheit (R1) eine Baugruppe (ST) vorgesehen, in der mit Hilfe einer Kontrolleinheit (VN) die Schnittstellen zu mindestens zwei Teilnehmereinheiten (SB1, SB2) und mindestens einer Netzbaugruppe (SD) nachgebildet werden.

In einer weiteren Ausführungsform ist das Netzwerk (NW) nach ISDN- (Integrated Services Digital Network)-Normen realisiert, wobei Anschlussleitungen (S1) entweder einem Primärratenanschluss oder einem Basisanschluss entsprechen.

Fig. 2

Die vorliegende Erfindung betrifft ein Verfahren nach dem Oberbegriff des Patentanspruchs 1 sowie eine Vorrichtung zur Durchführung des Verfahrens.

Nebenstellenanlagen bzw. Teilnehmervermittlungsanlagen sind meist auf privaten Grundstükken installierte Fernmeldesysteme für die Vermittlung von Daten - wie Test, Sprache oder sonstige Informationen - und bestehen aus einem Nebenstellennetz für die Übertragung, einer Nebenstellenvermittlung als Vermittlungseinrichtung und diversen Nebenstellen, die auch als Endgeräte bezeichnet werden. Unter dem Begriff "Endgerät" können dabei beispielsweise Telefonapparate, Fernschreiber oder Fernkopierer verstanden werden. Ferner werden Nebenstellenanlagen zur Erweiterung der Vermittlungsmöglichkeiten meist über Leitungsbündel an öffentliche Fernmeldenetze angeschlossen. Damit wird jedoch nicht nur erreicht, dass die am öffentlichen Fernmeldenetz angeschlossenen Teilnehmer mit den an die Nebenstellenanlagen angeschlossenen Teilnehmern verbunden werden können, sondern insbesondere auch, dass Teilnehmer von verschiedenen Nebenstellenanlagen miteinander verbunden werden können. Stellt sich dabei heraus, dass Verbindungen zwischen zwei an das öffentliche Fernmeldenetz angeschlossene Nebenstellenanlagen häufig gewünscht werden - beispielsweise bei häufigem Informationsaustausch zwischen Zweigstellen einer Firma -, so wird oft aus Gründen der Wirtschaftlichkeit oder auch wegen der Forderung, dass Übertragungsleitungen dauernd verfügbar sein müssen, eine sogenannte Mietleitung oder Standleitung zwischen den betroffenen Nebenstellenanlagen eingerichtet. Solche Standleitungen werden unabhängig vom Verkehrsaufkommen zwischen den verbundenen Nebenstellenanlagen dauernd aufrechterhalten und verursachen dem Betreiber Kosten, auch wenn keine Daten übertragen werden. Soll zudem eine Standleitung derart ausgelegt werden, dass alle gewünschten Verbindungen auch beim maximal erwarteten Verkehrsaufkommen über diese Standleitung geführt werden können, so ergibt sich im Durchschnitt insbesondere bei grossen Schwankungen im Verkehrsaufkommen eine schlechte Ausnützung der Standleitung, was sich in entsprechend hohen Kosten bemerkbar macht.

Der vorliegenden Erfindung liegt daher die Aufgabe zugrunde, ein Verfahren anzugeben, durch das die Wirtschaftlichkeit von häufig miteinander verbundenen Nebenstellenanlagen verbessert wird.

Diese Aufgabe wird durch die im kennzeichnenden Teil des Patentanspruchs 1 angegebenen Massnahmen gelöst. Vorteilhafte Ausgestaltungen der Erfindung sowie eine Vorrichtung sind in weiteren Ansprüchen angegeben.

Die Erfindung weist folgende Vorteile auf: Da zwischen Nebenstellenanlagen aufgebaute Nutzkanäle von zu diesen gehörenden Signalisierungskanälen getrennt verlaufen, können die Nutz- und Signalisierungskanäle auch getrennt voneinander auf- bzw. abgebaut werden. Durch diese Trennung kann bei Aufrechterhaltung mindestens eines Signalisierungskanals die Anzahl Nutzkanäle der momentan benötigten Übertragungskapazität angepasst werden, d.h. die Anzahl der geschalteten Nutzkanäle wird den tatsächlichen Vefkehrswerten angepasst. Kosten fallen demzufolge lediglich im Umfang der belegten Nutzkanäle und der benötigten Signalisierungskanäle an und entsprechen somit auch proportional den Verkehrswerten. Ferner können durch die Einlagerung der zwischen den Nebenstellenanlagen zu übertragenden Signalisierungsinformationen in einen oder mehrere Nutzkanäle beliebige Signalisierungsprotokolle verwendet werden, da eine solche "in-Band"-Signalisierung für das öffentliche Fernmeldenetz transparent ist, d.h. auf das öffentliche Fernmeldenetz keinen Einfluss hat. Darüber hinaus muss die Hardware von bestehenden Nebenstellenanlagen bei der Anwendung des erfindungsgemässen Verfahren nicht geändert werden. Daraus ergibt sich auch, dass sämtliche Leistungsmerkmale für eine solche Nebenstellenanlage erhalten bleiben bzw. weiter ausgebaut werden können, auch wenn die Leistungsmerkmale des öffentlichen Fernmmeldenetzes nicht verändert werden. Schliesslich bleibt auch der Anschluss an das öffentliche Fernmeldenetz in gleicher Weise bestehen und braucht aufgrund der Anwendung des Verfahrens nicht geändert zu werden.

Die Erfindung wird nachfolgend anhand von Zeichnungen beispielsweise näher erläutert. Dabei zeigt

Fig. 1    ein mit verschiedenen Vermittlungseinheiten verbundenes öffentliches Fernmeldenetz und

Fig. 2    einen Aufbau einer dieser, an das öffentliche Fernmeldenetz anschliessbaren Vermittlungseinheiten.

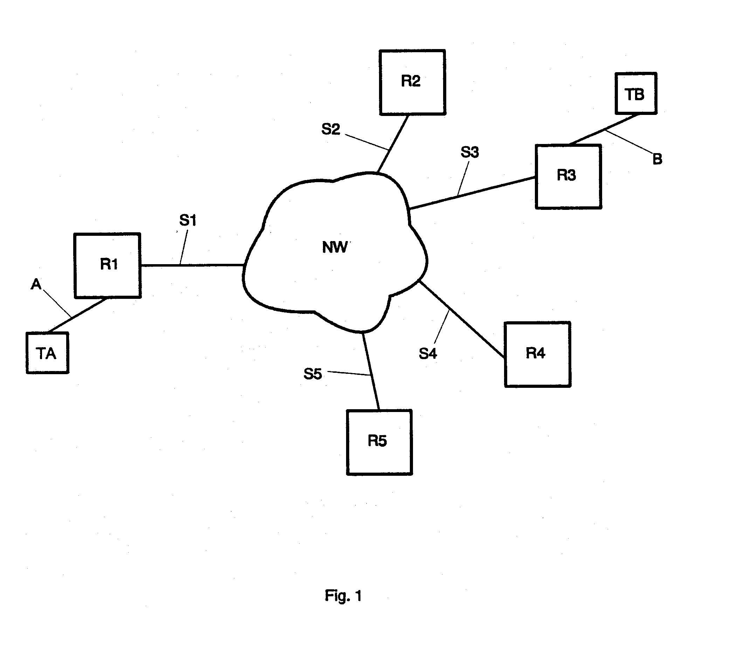

In Fig. 1 ist ein öffentliches Fernmeldenetz NW dargestellt, an das mehrere Vermittlungseinheiten R1 bis R5 über Anschlussleitungen S1 bis S5 angeschlossen sind. Die Vermittlungseinheiten R1 bis R5 entsprechen dabei Nebenstellenanlagen, an die normalerweise eine Vielzahl von Endgeräten wie Telefonapparate, Fernschreiber, Fernkopierer, etc. angeschlossen sind. Anstelle der vielen Endgeräte sind in Fig. 1 lediglich zwei dargestellt, nämlich ein an die Vermittlungseinheit R1 über eine Leitung A angeschlossenes Endgeräte TA und ein an die Vermittlungseinheit R3 über eine Leitung B angeschlossenes Endgerät TB. Ebenfalls nicht dargestellt sind Endgeräte, die direkt an das öffentliche Fernmeldenetz NW angeschlossen sind, mit denen die an die Vermittlungseinheiten R1 bis R5 angeschlossenen Endgeräte TA und TB ebenfalls verbunden werden können.

Das öffentliche Fernmeldenetz NW ist vorzugsweise ein nach ISDN- (Integrated Services Digital Network)- Normen arbeitendes digitales Fernmeldenetz, das mit den Vermittlungseinheiten R1 bis R5 entweder über Basisanschlüsse oder über Primärratenanschlüsse verbunden ist. Während sich ein Basisanschluss üblicherweise aus zwei B- Kanälen mit einer Übertragungsrate von je 64 kBit/s und einem Signalisierungskanal mit einer Übertragungsrate von 16 kBit/s zusammensetzt, besteht ein Primärratenanschluss aus dreissig B- Kanälen und einem Signalisierungskanal mit einer Übertragungsrate von je 64 kBit/s. Ausführliche Angaben zu diesen Übertragungsarten können beispielsweise aus den CCITT-(Comité Consultatif International Télégraphique et Téléphonique)-Empfehlungen I-431 und I-430 (CCITT, Blue Book, Genf: International Telecommunication Union, 1989) entnommen werden. In den folgenden, anhand eines Primärratenanschlusses gemachten Ausführungen muss darauf geachtet werden, dass zwischen Signalisierungsinformationen des Signalisierungskanals (D-Kanal) und in einem B-Kanal enthaltene Signalisierungsinformationen der Nutzkanäle zwischen Vermittlungseinheiten R1 bis R5 zu unterscheiden ist. Während die Signalisierungsinformationen des D-Kanals für das öffentliche Fernmeldenetz NW bestimmt sind und zum Auf- und Abbau von Verbindungen durch das öffentliche Fernmeldenetz NW verwendet werden, sind die in einem B-Kanal enthaltenen Signalisierungsinformationen für die Vermittlungseinheiten R1 und R3 bestimmt und werden zum Auf- und Abbau von Nutzkanälen innerhalb eines durch die Vermittlungseinheiten R1 und R3 gebildeten Verbundsystems verwendet. Für das öffentliche Fernmeldenetz NW sind diese letztgenannten Signalisierungsinformationen transparent, weshalb für diese auch etwa der Begriff der "in-Band"-Signalisierung verwendet wird.

Wie bereits erwähnt, sind die Vermittlungseinheiten R1 bis R5 eigentliche Nebenstellenanlagen, die häufig als private Fernmeldenetze verwendet werden. Dies bedeutet jedoch nicht, dass lediglich Verbindungen zwischen Endgeräten, die an die gleiche Vermittlungseinheit R1 bis R5 angeschlossen sind, aufgebaut werden. Vielmehr werden besonders häufig Verbindungen zu Teilnehmern des öffentlichen Fernmeldenetzes NW oder zu Teilnehmern anderer an das öffentliche Fernmeldenetz NW angeschlossener Vermittlungseinheiten R1 bis R5 angefordert. Im letztgenannten Fall, bei dem zwischen zwei der Vermittlungseinheiten R1 bis R5 besonders häufig Verbindungen gewünscht werden, wird erfindungsgemäss ein B- Kanal zur Übertragung der Signalisierungsinformation zwischen den betroffenen Vermittlungseinheiten R1 bis R5 verwendet, wobei dieser B- Kanal zumindest so lange aufgebaut bleibt, als ein als Nutzkanal verwendeter B-Kanal aufgebaut ist oder andere Signalisierungsinformationen zwischen den Vermittlungseinheiten R1 bis R5 ausgetauscht werden. Erfindungswesentlich ist dabei ebenso, dass die momentan nicht zur Datenübertragung verwendeten B-Kanäle zumindest zum Teil abgebaut werden. Damit wird erreicht, dass die Kosten gegenüber der Verwendung von festen Mietleitungen wesentlich reduziert werden können. Zudem bleiben Leistungsmerkmale, die in den einzelnen Vermittlungseinheiten R1 und R3 zur Verfügung gestellt werden, auch innerhalb des durch die Vermittlungseinheiten R1 und R3 gebildeten Verbundsystems verfügbar. Zu diesen Leistungsmerkmalen gehört beispielsweise ein schneller Verbindungsaufbau auch mit internen Rufnummern, die Anzeige des Namens und der Nummer des rufenden Teilnehmers, die Anrufumleitung, der Rückruf, die Rückfrage, das Übergeben eines rufenden Teilnehmers an einen anderen, das Anklopfen, das Aufschalten und die automatische Wegoptimierung (Route Optimization). Ferner können auch zukünftige Leistungsmerkmale zwischen den Vermittlungseinheiten R1 und R3 sofort genutzt werden. Schliesslich können die Signalisierungsinformationen mehrerer Nutzkanäle in einem B- Kanal übertragen werden, was zu einer weiteren Kostensenkung beiträgt.

Durch die erfindungsgemässe Trennung der Signalisierung- von den Nutzkanälen zwischen den Vermittlungseinheiten R1 und R3 können fest geschaltete Sprechwegdurchschaltungen - wie sie in bekannter Weise mit Mietleitungen realisiert werden - durch Wählverbindungen ersetzt werden, die nur bei Bedarf geschaltet werden. Die Signalisierungsinformationen werden dabei vorzugsweise für jede angewählte Vermittlungseinheit R1 bis R5 über einen dauernd geschalteten B- Kanal übertragen, wobei in diesem B-Kanal mit einer Datenübertragung von 64 kBit/s ein von ISO (International Standardization Organization) genormtes synchrones HDLC-(High Level Data Link Control)-Übertragungsprotokoll verwendet wird. Wegen der Transparenz im öffentlichen Netzwerk NW können jedoch auch andere Übertragungsprotokolle verwendet werden. Die Signalisierung aller B- Kanäle im öffentlichen Fernmeldenetz NW - d.h. sowohl für die, welche die Nutzinformation enthalten, als auch für die, welche die Signalisierungsinformationen enthalten - erfolgt im Signalisierungskanal D. Die erwähnte, in einem B-Kanal enthaltene, auch als "in-Band" bezeichnete Signalisierung zwischen Vermittlungseinheiten R1 bis R5 kann beispielsweise ebenfalls über eine V.24-Schnittstelle übertragen werden.

In einer weiteren Ausführungsform der Erfindung bleibt der die "in-Band"-Signalisierung enthaltende B-Kanal immer oder zumindest während eines bestimmten Zeitabschnitts - zum Beispiel während den normalen Geschäftszeiten - aufgebaut, damit bei einer allfälligen Signalisierung keine Zeit verloren geht, bis ein B- Kanal dazu zur Verfügung steht.

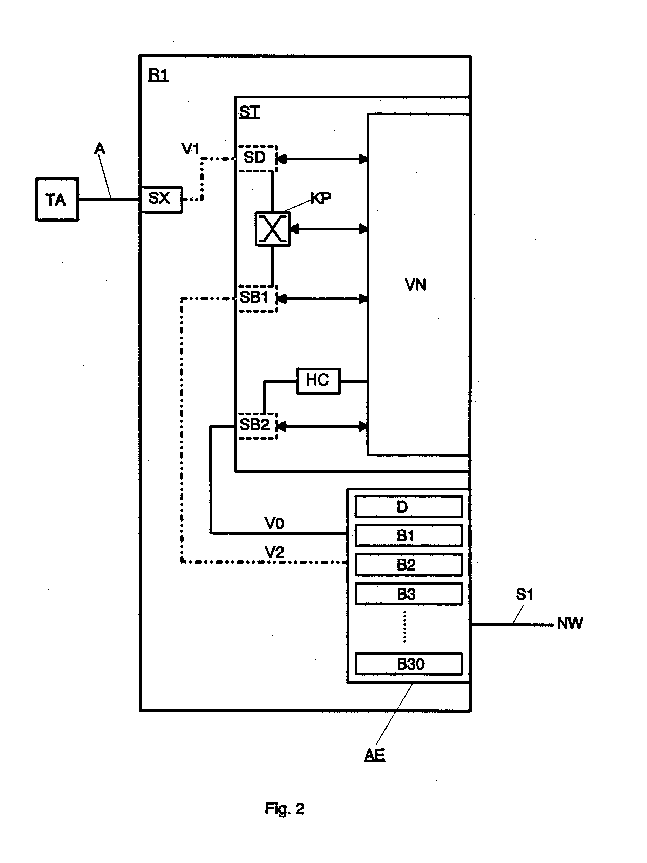

Anstelle der vorgeschlagenen "in-Band"-Signalisierung kann in einem nach ISDN-Normen aufgebauten Fernmeldenetz die Signalisierung auch gemäss den von ETSI-(European Telecommunication Standard Institute) in der ETS-(European Technical Standard)-Norm 300 286 definierten Diensten (User-User Services) implementiert werden. Die "in-Band"-Signalisierungsinformationen würden in einem solchen Fall im Signalisierungskanal D (Fig. 2) zwischen den Vermittlungseinheiten R1 bis R5 in einem sogenannten Transportkontainer übertragen werden, dessen Inhalt für das öffentliche Fernmeldenetz NW transparent bleibt.

Schliesslich besteht eine weitere Ausführungsform darin, dass mehrere, je in einem Übertragungskanal zu übertragende Sprachsignale beispielsweise nach dem ADPCM-(Adaptive Differential Pulse Code Modulation)-Verfahren komprimiert werden (CCITT-Empfehlung G.726 / G.721). Die daraus resultierende höhere Datendichte ermöglicht die Übertragung von mehreren Sprachsignalen (sogenannte virtuelle Nutzkanäle) in einem einzigen Übertragungskanal. Zusätzlich besteht auch die Möglichkeit, Signalisierungsinformationen zusammen mit den komprimierten Sprachsignalen über den gleichen Übertragungskanal zu übertragen. Ferner wird bei einer weiteren Ausführungsform zusätzliche Bandbreite gewonnen, indem die Übertragungsrate zur Übertragung der Signalisierungsinformationen reduziert wird, womit diese lediglich langsamer übertragen werden, aber nicht verloren gehen.

Bei der Realisierung des ADPCM-Verfahrens können herkömmliche Signalprozessoren oder spezielle ADPCM-Bausteine verwendet werden.

Bei der Sprachkomprimierung können auch Verfahren eingesetzt werden, die eine höhere Signalkomprimierung zulassen. Solche Verfahren basieren häufig auf dem CELP-(Code Exited Linear Prediction)-Algorithmus, der in der CCITT-Norm G.728 näher beschrieben ist.

Bei der Verwendung von Sprachkomprimierungsverfahren ist zu beachten, dass durch deren Anwendung Informationen verloren gehen, was sich in einer Verminderung der Signalqualität auswirkt. Allerdings ist die Signalqualität stark vom Grad der Komprimierung abhängig. So kann bei einer Komprimierung von Sprachsignalen auf die halbe Bandbreite, d.h. von einer Übertragungsrate von 64 kBit/s auf 32 kBit/s, kaum eine Qualitätseinbusse festgestellt werden. Erst bei einer Reduktion der Bandbreite auf einen Drittel (24 kBit/s), einen Viertel (16 kBit/s) oder gar auf einen Achtel (8 kBit/s) der ursprünglichen Bandbreite muss eine hörbare Beeinträchtigung der Signalqualität in Kauf genommen werden. Bei den drei letztgenannten Übertragungsraten ist - im Gegensatz zur erst genannten - eine Fernkopieübertragung (FAX Gruppe 3) nicht mehr möglich. Zudem nimmt die Signalqualität bei einer ADPCM-Komprimierung der Übertragungsrate auf 8 kBit/s erheblich ab.

Im folgenden werden mögliche Belegungsstrukturen von Basisanschlüssen mit Sprachkanälen, deren Übertragungsrate auf 32, 24 und 16 kBit/s komprimiert wurden, erläutert. Ausgehend von einer Signalisierungsrate von 16 kBit/s ("in-Band"-Signalisierungskanal), die bei der ISDN-Taktrate von 8 kHz eine Wortbreite von zwei Bit ergibt, kann im ersten B-Kanal (64 kBit/s Übertragungsrate) neben den Signalisierungsinformationen lediglich ein 32 kBit/s Sprachkanal mit einer Wortbreite von vier Bit übertragen werden. Somit bleibt bei dieser Belegungsstruktur im ersten B-Kanal ein Übertragungskanal von 16 kBit/s unbenutzt. Die weiteren B-Kanäle, sofern diese benötigt werden, können jeweils mit zwei Sprachkanälen mit je 32 kBit/s Übertragungsrate voll ausgelastet werden.

Der erste, in der erwähnten Belegungsstruktur nicht voll ausgelastete B-Kanal kann jedoch voll ausgenützt werden, wenn neben dem 16 kBit/s-Signalisierungskanal anstelle des einzelnen 32 kBit/s-Sprachkanals und des unbenutzten 16 kBit/s-Übertragungskanals zwei 24 kBit/s-Sprachkanäle vorgesehen sind, die je eine Wortbreite von drei Bit aufweisen. Ausser in der eben erwähnten Struktur des ersten B-Kanals sind 24 kBit/s-Sprachkanäle ungeeignet, da mit diesen ein B-Kanal von 64 kBit/s Übertragungsrate nicht voll ausgelastet werden kann. Aus diesem Grund ist vorgesehen, die weiteren zum gleichen Leitungsbündel gehörenden B-Kanäle entweder mit 32 kBit/s- oder mit noch zu erläuternden 16 kBit/s-Sprachkanälen auszulasten.

Eine weitere Belegungsstruktur von Basisanschlüssen besteht darin, dass alle Sprachkanäle eine Übertragungsrate von 16 kBit/s aufweisen. Damit kann der erste, den 16 kBit/s-Signalisierungskanal enthaltenden B-Kanal drei weitere 16 kBit/s-Sprachkanäle aufnehmen, und die weiteren, auf dem gleichen Signalisierungskanal basierenden B-Kanäle können mit je vier Sprachkanälen belegt werden. Diese Belegungsstruktur ergibt eine besonders gute Auslastung von B-Kanälen, wobei bei dieser Übertragungsrate eine Verminderung der Übertragungsqualität in Kauf genommen werden muss.

Ausgehend von den erwähnten Belegungsstrukturen sind auch Belegungsstrukturen denkbar, in denen Kombinationen von verschiedenen Übertragungsraten vorgesehen sind. Allerdings bedeutet dies, dass Teilnehmer, die über den gleichen Leitungsbündel kommunizieren, unterschiedliche Übertragungsqualitäten wahrnehmen, was oft unerwünscht ist.

4

Die "in-Band"-Signalisierung ist bei den beschriebenen Belegungsstrukturen auf 16 kBit/s reduziert, was zu entsprechenden, allerdings nur unwesentlichen Verzögerungen bei der Signalisierung zwischen verbundenen Nebenstellen führt.

In den folgenden Tabellen ist die Ausnützung von Basisanschlüssen eines ISDN dargestellt, wobei in der Tabelle 1 die Sprachkomprimierung auf 32 kBit/s Übertragungsrate und in der Tabelle 2 die Sprachkomprimierung auf 16 kBit/s Übertragungsrate dargestellt ist. Die in den Tabellen fett dargestellten Anzahl Leitungen ermöglichen eine besonders optimale Ausnützung von Basisanschlüssen zum ISDN. Die Werte in Klammern sind zu vermeiden, da hier die B-Kanäle nicht optimal ausgenützt werden können.

Tabelle 1

| Anzahl virtueller Leitungen | Anzahl B-Kanäle | Anzahl Basisanschlüsse |
|---|---|---|
| **2** | 2 | 1 |
| 4 | 3 | 2 |
| **6** | 4 | 2 |
| 8 | 5 | 3 |
| **10** | 6 | 3 |
| 12 | 7 | 4 |
| **14** | 8 | 4 |
| 16 | 9 | 5 |
| **18** | 10 | 5 |
| ... | ... | ... |
| 30 | 16 | 8 |
| 32 | 17 | 8 |

Tabelle 2

| Anzahl virtueller Leitungen | Anzahl B-Kanäle | Anzahl Basisanschlüsse |
|---|---|---|
| 2 | 1 | 1 |
| (4) | 2 | 1 |
| **6** | 2 | 1 |
| (8) | 3 | 2 |
| 10 | 3 | 2 |
| (12) | 4 | 2 |
| **14** | 4 | 2 |
| (16) | 5 | 3 |
| 18 | 5 | 3 |
| (20) | 6 | 3 |
| **22** | 6 | 3 |
| (24) | 7 | 4 |
| 26 | 7 | 4 |
| (28) | 8 | 4 |
| **30** | 8 | 4 |
| (31) | 9 | 5 |
| 32 | 9 | 5 |

Kurz nach der Inbetriebnahme einer der beschriebenen Belegungsstrukturen wird sich bei einer mittleren Auslastung der Belegungsstruktur durch die zur Verfügung stehenden Sprachkanäle keine bezüglich den Kosten optimierte Verteilung der Sprachkanäle in der Belegungsstruktur einstellen. Vielmehr werden die benötigten Sprachkanäle schon nach kurzer Zeit beliebig in der vorhandenen Belegungsstruktur verteilt sein, so dass mehrere Übertragungskanäle lediglich mit einem komprimierten Sprachkanal belegt sind, obwohl zwei, drei oder sogar vier Sprachkanäle gleichzeitig übertragen werden könnten. Eine Weiterausbildung der Erfindung besteht deshalb darin, dass jeder neue Sprachkanal möglichst in einem bereits aufgebauten Übertragungskanal plaziert werden kann. Existieren mehrere aufgebaute Übertragungskanäle mit freier Übertragungskapazität, soll derjenige mit der grössten freien Übertragungskapazität zur Belegung mit dem neuen Sprachkanal bevorzugt werden (Füllprinzip). Dadurch wird eine bessere Ausnützung der aufgebauten Übertragungskanäle erreicht.

Eine weitere Verbesserung kann erreicht werden, wenn die Anzahl Übertragungskanäle und deren Belegung durch die Sprachkanäle während dem Betrieb laufend dahingehend überwacht wird, ob allenfalls mehrere Sprachkanäle, die auf verschiedene Übertragungskanäle eines Leitungsbündels verteilt sind, in einem einzigen Übertragungskanal zusammengefasst werden können. Ist diese Bedingung erfüllt, so werden die Sprachkanäle zusammengefasst und die frei werdenden Übertragungskanäle ausgelöst. Damit lassen sich die Übertragungskosten weiter reduzieren.

Statt der einen anhand Fig. 1 erläuterten Verbindung zwischen zwei Vermittlungseinheiten R1 und R3 können auch alle fünf in Fig. 1 dargestellten Vermittlungseinheiten R1 bis R5 miteinander zu einem Verbundsystem zusammengeschlossen werden, dessen Funktionsweise anhand Fig. 2 weiter erläutert wird.

Fig. 2 zeigt den prinzipiellen Aufbau einer mit einem Endgerät TA verbundenen Vermittlungseinheit R1, die über eine Anschlussleitung S1 an das öffentliche Fernmeldenetz NW angeschlossen ist. Die Vermittlungseinheit R1 besteht aus einer Teilnehmereinheit SX, einer Anschlusseinheit AE und einer Baugruppe ST, die neben zwei Teilnehmereinheiten SB1 und SB2 eine Netzbaugruppe SD, eine Kontrolleinheit VN, eine Koppeleinheit KP und eine Protokolleinheit HC enthält. Da es sich bei der Anschlussleitung S1 um einen Primärratenanschluss handelt, besteht diese bei Vollausbau aus den dreissig B-Kanälen B1 bis B30 und einem Signalisierungskanal D, der zur Signalisierung der B- Kanäle B1 bis B30 im öffentlichen Fernmeldenetz NW - d.h. der Nutzkanäle und der "in-Band"-Signalisierungskanäle zwischen Vermittlungseinheiten R1 bis R5 - verwendet wird. Wie bereits erwähnt, weist jeder Kanal eines Primärratenanschlusses eine Datenübertragungsrate von 64 kBit/s auf. Anstelle eines Primärratenanschlusses kann jedoch in analoger Weise auch ein oder mehrere je aus zwei B-Kanälen und einem Signalisierungskanal bestehende Basisanschlüsse verwendet werden.

Das stellvertretend für sämtliche Endgeräte dargestellte Endgerät TA ist über eine Leitung A mit der Teilnehmereinheit SX verbunden, die ihrerseits über eine Verbindung V1 mit der Netzbaugruppe SD verbunden ist. Innerhalb der Baugruppe ST ist diese Netzbaugruppe SD über die Koppeleinheit KP mit der Teilnehmereinheit SB1 verbunden, wobei sowohl die Koppeleinheit KP als auch die Teilnehmereinheit SB1 von der Kontrolleinheit VN gesteuert werden. Die Teilnehmereinheit SB1 ist schliesslich über eine Verbindung V2 mit der Anschlusseinheit AE verbunden, an die die Anschlussleitung S1 des öffentlichen Netzwerks NW angeschlossen ist.

Neben der Verbindung V2 zwischen der Baugruppe ST und der Anschlusseinheit AE ist zusätzlich eine Verbindung V0 vorgesehen, welche die ebenfalls von der Kontrolleinheit VN gesteuerte Teilnehmereinheit SB2 mit der Anschlusseinheit AE verbindet. Ferner wird die Teilnehmereinheit SB2 innerhalb der Baugruppe ST über die Protokolleinheit HC mit der Kontrolleinheit VN verbunden.

Sind die dreissig von einer Baugruppe ST verarbeitbaren B-Kanäle für die Übertragung von Nutzinformationen nicht ausreichend, können weitere Baugruppen ST und weitere Anschlusseinheiten AE in die Vermittlungseinheiten R1 bis R5 aufgenommen werden.

In der Baugruppe ST enthaltene, in der Fig. 2 strichliniert dargestellte Teilnehmereinheiten SB1 und SB2 und die Netzbaugruppe SD sind nicht als Hardwarekomponenten vorhanden, sondern werden von der Kontrolleinheit VN entsprechend der Teilnehmereinheit SX nachgebildet. Dies hat den Vorteil, dass mit dem erfindungsgemässen Verfahren auszurüstenden Vermittlungseinheiten lediglich mit Baugruppen ST und der darin enthaltenden Emulationssoftware ausgestattet werden müssen, die sämtliche Schnittstellen der Teilnehmereinheiten SB1 und SB2 emuliert.

Im folgenden wird das erfindungsgemässe Verfahren anhand von Fig. 2 erläutert:

Beim Erstellen einer Verbindung zwischen dem an die Vermittlungseinheit R1 angeschlossenen Endgerät TA und dem an die Vermittlungseinheit R3 angeschlossenen Endgerät TB (Fig. 1) wird in der Vermittlungseinheit R1 die Verbindung V1 von der Teilnehmereinheit SX zur Netzbaugruppe SD der Baugruppe ST aufgebaut. Gesteuert durch die Kontrolleinheit VN wird die Nutzinformation - d.h. beispielsweise die an das Endgeräte TB (Fig. 1) zu übertragenden Daten - über die Koppeleinheit KP an die Teilnehmereinheit SB2 weitergeleitet. In Kenntnis von der aufzubauenden Verbindung zu dem an die Vermittlungseinheit R3 angeschlossenen Endgerät TB weist die Kontrolleinheit VN die Anschlusseinheit AE an, einen der B- Kanäle B1 bis B30 zur Vermittlungseinheit R3 zur Übertragung der Nutzinformation aufzubauen. Falls noch kein B-Kanal zur Übertragung der "in-Band"-Signalisierungsinformationen aufgebaut ist, wird auch ein solcher erstellt, indem dies - wie bereits erwähnt - über den Signalisierungskanal D dem öffentlichen Netzwerk NW angezeigt wird.

Von dem an die Vermittlungseinheit R1 angeschlossenen Endgerät TA aus gesehen, ist die Verbindung V1 eine normale Netzwerkverbindung, d.h. es besteht kein Unterschied, ob die Verbindung V1 zu einem an die gleiche Vermittlungseinheit R1 bis R5 angeschlossenen Endgerät oder ob eine Verbindung über das öffentliche Netzwerk NW zu einem Endgerät einer anderen Vermittlungseinheit R1 bis R5 führt. In gleicher Weise entspricht eine durch die Kontrolleinheit VN aufgebaute Wählverbindung über das öffentliche Netzwerk NW für einen Nutzkanal oder für einen Signalisierungskanal nach dem erfindungsgemässen Verfahren einer normalen Wählverbindung, d.h. die Verbindung V2 ist eine normale Amtsverbindung.

Die Kontrolleinheit VN übernimmt also neben der Steuerung der Vermittlung der Nutzinformation auch die Aufbereitung der "in-Band"-Signalisierung. Dies erfolgt mit Hilfe der Protokolleinheit HC und der Teilnehmereinheit SB2, von der die Signalisierungsinformation über die Verbindung V0 an die Anschlusseinheit AE übertragen und dem für die Übertragung vorgesehenen B- Kanal zugewiesen wird. Für die "in-Band"-Signalisierung wird dabei vorzugsweise das HDLC- (High Level Data Link Control)- Protokoll verwendet, wobei Signalisierungsinformationen für mehrere Nutzkanäle in einem als Signalisierungskanal verwendeten B- Kanal aufgenommen werden. Diese Signalisierungsinformation ist für des öffentliche Netzwerk NW transparent.

In der Baugruppe ST erfolgt demzufolge eine Trennung der Nutz- von der Signalisierungsinformation, wobei die Nutzinformation über die Teilnehmereinheit SB1 und die Signalisierungsinformation über die Teilnehmereinheit SB2 je über einen Kanal über das Netzwerk NW übertragen werden. Dazu bildet die von der Kontrolleinheit VN kontrollierte (bzw. erzeugte) Teilnehmereinheit SB1 die Teilnehmereinheit SX nach. Von dem gerufenen Endgerät TB aus gesehen erscheint demzufolge nicht direkt das Endgeräte TA als rufendes Endgerät, sondern ein durch die Kontrolleinheit VN virtuell erzeugtes Endgerät in der Teilnehmereinheit SB1.

In analoger Weise wird ein fiktives Endgeräte zur Erstellung eine Verbindung für die Signalisierungsinformation in der ebenfalls durch die Kontrolleinheit VN kontrollierten Teilnehmereinheit SB2 vorgenommen.

In einer weiteren Ausführungsform der Erfindung wird mindestens ein Nutzkanal zur Übertragung der Signalisierungsinformation dauernd oder zumindest während einem fest vorgegebenen Zeitabschnitt - wie beispielsweise während den normalen Geschäftszeiten - aufrechterhalten. Dadurch können Verbindungen zwischen Vermittlungseinheiten R1 bis R5 schneller aufgebaut werden.

Beim Zusammenschalten von beispielsweise vier Vermittlungseinheiten R1 bis R4 (Fig. 1), die je mit einer Anschlusseinheit AE ausgerüstet sind, stehen bei jeder Anschlusseinheit AE, d.h. bei jeder der Vermittlungseinheiten R1 bis R4, mindestens 27 der 30 B- Kanäle B1 bis B30 als Nutzkanäle zur Verfügung, die den weiteren drei der vier miteinander verbundenen Vermittlungseinheiten R1 bis R4 flexibel zugeordnet werden können. Typisch sind beispielsweise vier bis zehn Nutzkanäle zwischen zwei der Vermittlungseinheiten R1 bis R4. Die restlichen drei der dreissig B- Kanäle B1 bis B30 werden für die Übertragung der "in-Band"-Signalisierung zwischen den Vermittlungseinheiten R1 bis R4 verwendet.

Es besteht jedoch auch die Möglichkeit mehr als vier Vermittlungseinheiten R1 bis R4 nach dem erfindungsgemässen Verfahren miteinander zu verknüpfen. Da dadurch die mittlere Anzahl der zur Verfügung stehenden Nutzkanäle für eine Verbindungsrichtung bei einer voll ausgebauten Anschlusseinheit AE entsprechend abnimmt, können auch mehrere Anschlusseinheiten AE in einer Vermittlungseinheit R1 bis R5 vorgesehen werden. Somit lassen sich die miteinander verbundenen Vermittlungseinheiten R1 bis R5 ihren Verkehrswerten entsprechend ausrüsten. Insbesondere ist dabei vorteilhaft, dass Vermittlungseinheiten R1 bis R5 auch zu einem späteren Zeitpunkt ihren Verkehrswerten angepasst werden können. Ebenso lässt sich ein Verbundsystem von verschiedenen Vermittlungseinheiten R1 bis R5 durch Hinzufügen von weiteren Vermittlungseinheiten erweitern.

Über die Anschlusseinheiten AE können jedoch nicht nur Verbindungen zu den mittels des erfindungsgemässen Verfahrens verbundenen Vermittlungseinheiten R1 bis R5 aufgebaut werden. Vielmehr können auch mit beliebigen, beispielsweise an das öffentliche Fernmeldenetz NW angeschlossenen Endgeräten Verbindungen über die Anschlusseinheit AE aufgebaut werden.

Wie bereits erwähnt, können auch weitere Baugruppen ST und weitere Anschlusseinheiten AE in die Vermittlungseinheiten R1 bis R5 aufgenommen werden. Dabei ist es jedoch nicht zwingend, dass auch in allen weiteren Baugruppen ST das erfindungsgemässe Verfahren zur Anwendung kommt. Denkbar und vorteilhaft ist insbesondere auch eine Kombination mit Baugruppen, die allein für die Kommunikation mit direkt an das öffentliche Netzwerk NW angeschlossenen Endgeräten verwendet werden können.

Schliesslich kann das Verfahren auch mit Mietleitungen kombiniert werden, indem jeweils eine Anzahl Mietleitungen dauernd zur Verfügung stehen und zusätzliche Kanäle, falls erforderlich, gemäss dem angegebenen Verfahren hinzu geschaltet werden.

**Patentansprüche**

1. Verfahren zum Übermitteln von Informationen zwischen mindestens zwei Endgeräten (TA, TB), die je an eine Vermittlungseinheit (R1, ..., R5) angeschlossen sind, wobei die Vermittlungseinheiten (R1, ..., R5) über mindestens einen Übertragungskanal mindestens eines Netzwerks (NW) miteinander verbunden werden können, **dadurch gekennzeichnet**, dass zur Übertragung von Signalisierungsinformationen zwischen den Vermittlungseinheiten (R1, ..., R5) mindestens ein Übertragungskanal als Signalisierungskanal aufgebaut wird und dass, falls auch Nutzinformationen übertragen werden, ein weiterer Übertragungskanal als Nutzkanal zur Übertragung der Nutzinformationen aufgebaut wird.

2. Verfahren zum Übermitteln von Informationen zwischen mindestens zwei Endgeräten (TA, TB), die je an eine Vermittlungseinheit (R1, ..., R5) angeschlossen sind, wobei die Vermittlungseinheiten (R1, ..., R5) über mindestens einen Übertragungskanal mindestens eines Netzwerks (NW) miteinander verbunden werden können, **dadurch gekennzeichnet**, dass zur Übertragung von Signalisierungsinformationen zwischen den Vermittlungseinheiten (R1, ..., R5) mindestens ein Übertragungskanal aufgebaut wird, dass, falls auch Nutzinformationen übertragen werden, diese komprimiert in virtuellen Nutzkanälen übertragen werden, wobei die virtuellen Nutzkanäle soweit möglich im selben Übertragungskanal wie die Signalisierungsinformationen übertragen werden, und dass bei voller Ausnützung des Übertragungskanals nach Bedarf weitere Übertragungskanäle zum Übertragen von weiteren Nutz- und/oder Signalisierungsinformationen aufgebaut werden.

3. Verfahren nach Anspruch 2, **dadurch gekennzeichnet**, dass die Komprimierung der Nutzkanäle mit Hilfe des ADPCM-(Adaptive Differential Pulse Code Modulation)-Verfahrens erfolgt.

4. Verfahren nach Anspruch 2 oder 3, **dadurch gekennzeichnet**, dass in einem physikalischen Übertragungskanal mehrere virtuelle Nutz- und/oder Signalisierungskanäle enthalten sind.

5. Verfahren nach Anspruch 4, **dadurch gekennzeichnet**, dass in einem Übertragungskanal zwei, drei oder vier virtuelle Nutzkanäle aufgenommen werden.

6. Verfahren nach einem der Ansprüche 2 bis 5, **dadurch gekennzeichnet**, dass jedwelche, durch das Auslösung von einzelnen Nutzkanälen entstehende suboptimale Ausnützung der aufgebauten Übermittlungskanäle durch Umgruppieren bzw. Zusammenfassen von virtuellen Nutzkanälen in möglichst wenigen Übermittlungskanälen korrigiert wird.

7. Verfahren nach einem der vorangehenden Ansprüche, **dadurch gekennzeichnet**, dass in einem Signalisierungskanal mehrere Nutzkanäle signalisiert werden.

8. Verfahren nach einem der vorangehenden Ansprüche, **dadurch gekennzeichnet**, dass neben den je nach dem Verkehrsaufkommen benötigten Nutzkanälen mindestens ein Übertragungskanal für Signalisierungsinformationen dauernd aufgebaut bleibt.

9. Verfahren nach einem der vorangehenden Ansprüche, **dadurch gekennzeichnet**, dass ein Signalisierungskanal erst dann zwischen zwei Vermittlungseinheiten (R1, ..., R5) aufgebaut wird, wenn zumindest ein Nutzkanal aufgebaut oder sonstige Signalisierungsinformationen zwischen den Vermittlungseinheiten (R1, ..., R5) übertragen werden sollen.

10. Verfahren nach einem der vorangehenden Ansprüche, **dadurch gekennzeichnet**, dass in den Signalisierungskanälen als Signalisierungsprotokoll die HDLC- (High Level Data Link Control)- Norm angewendet wird.

11. Verfahren nach einem oder mehrerer der vorangehenden Ansprüche, **dadurch gekennzeichnet**, dass die in einem Signalisierungskanal übertragenen Signalisierungsinformationen der Vermittlungseinheiten (R1, ..., R5) für das Netzwerk (NW) transparent sind.

**12.** Vorrichtung zur Durchführung des Verfahrens nach Anspruch 1 oder 2 mit mindestens zwei Endgeräten (TA, TB), die je an eine Vermittlungseinheit (R1, ..., R5) angeschlossen sind, wobei die Vermittlungseinheiten (R1, ..., R5) über Übertragungskanäle mindestens eines Netzwerks (NW) miteinander verbunden werden können, **dadurch gekennzeichnet**, dass in den Vermittlungseinheiten (R1, ..., R5) mindestens eine Baugruppe (ST) vorgesehen ist, die mindestens eine den Verbindungsauf- und abbau steuernde Kontrolleinheit (VN) enthält.

**13.** Vorrichtung nach Anspruch 12, **dadurch gekennzeichnet**, dass die über das Netzwerk (NW) miteinander verbundenen Vermittlungseinheiten (R1, ..., R5) neben der Baugruppe (ST) bzw. den Baugruppen mindestens je eine Teilnehmereinheit (SX) und mindestens je eine Anschlusseinheit (AE) enthalten, dass jede Teilnehmereinheit (SX auf der einen Seite über mindestens eine Leitung (A) mit mindestens einem Endgerät (TA) und auf der anderen Seite über eine Verbindung (V1) mit mindestens einer der Baugruppen (ST) verbunden ist und dass jede Baugruppe (ST) über mindestens zwei Verbindungen (V0, V2) mit der Anschlusseinheit (AE) verbunden ist, wobei diese über mindestens eine Anschlussleitung (S1, ..., S5) an das Netzwerk (NW) angeschlossen ist.

**14.** Vorrichtung nach Anspruch 12 oder 13, **dadurch gekennzeichnet**, dass eine der Baugruppen (ST) neben der Kontrolleinheit (VN) aus mindestens zwei Teilnehmereinheiten (SB1, SB2), einer Netzbaugruppe (SD), einer Koppeleinheit (KP) und einer Protokolleinheit (HC) besteht, dass die Netzbaugruppe (SD) auf der einen Seite über die Verbindung (V1) mit der Teilnehmereinheit (SX) und auf der anderen Seite über die Koppeleinheit (KP) mit der ersten Teilnehmereinheit (SB1) verbunden ist, die an die Verbindung (V2) angeschlossen ist und dass die zweite Teilnehmereinheit (SB2) auf der einen Seite mit der Verbindung (V0) und auf der anderen Seite über die Protokolleinheit (HC) mit der Kontrolleinheit (VN) verbunden ist, die zur Steuerung bzw. zur Nachbildung von Schnittstellen auf die Netzbaugruppe (SD), auf die zwei Teilnehmereinheiten (SB1, SB2) und auf die Koppeleinheit (KP) einwirkt.

**15.** Vorrichtung nach einem oder mehrerer der Ansprüche 12 bis 14, **dadurch gekennzeichnet**, dass je zwei der in einem Verbundsystem zusammengefassten Vermittlungseinheiten (R1, ..., R5) über einen für die "in-Band"-Signalisierung benötigten Übertragungskanal durch das Netzwerk (NW) verbunden sind.

**16.** Vorrichtung nach einem oder mehrerer der Ansprüche 12 bis 15, **dadurch gekennzeichnet**, dass die Signalisierungsinformationen über mindestens eine V.24-Schnittstelle oder über mindestens einen B-Kanal mindestens eines Primärratenanschlusses oder eines Basisanschlusses, die ISDN-(Integrated Services Digital Network)-Normen erfüllen, geführt sind.

Fig. 1

Fig. 2